Europäisches Patentamt

(19) European Patent Office

Office européen des brevets

(11) Numéro de publication: **0 267 251**
**B1**

(12) **FASCICULE DE BREVET EUROPEEN**

(45) Date de publication du fascicule du brevet: **24.10.90**

(51) Int. Cl.⁵: **G 01 K 11/06, G 01 K 3/04**

(21) Numéro de dépôt: **87903329.8**

(22) Date de dépôt: **19.05.87**

(86) Numéro de dépôt international:
**PCT/FR87/00162**

(87) Numéro de publication internationale:
**WO 87/07373 03.12.87 Gazette 87/27**

(54) **PROCEDE ET DISPOSITIF DE DETECTION DE LA TEMPERATURE A LAQUELLE UN SOLIDE, UN LIQUIDE OU UN GAZ EST SUSCEPTIBLE D'AVOIR ETE SOUMIS.**

(30) Priorité: **20.05.86 FR 8607590**

(43) Date de publication de la demande:
**18.05.88 Bulletin 88/20**

(45) Mention de la délivrance du brevet:
**24.10.90 Bulletin 90/43**

(84) Etats contractants désignés:
**AT BE CH DE FR GB IT LI LU NL SE**

(56) Documents cités:
**FR-A-21 000 43**
**US-A-3 965 848**

(73) Titulaire: **DOUESNEL, Xavier**
**10-16, rue Pierre Guérin**
**F-75016 Paris (FR)**

(73) Titulaire: **Toupin, Joseph François**
**28 Rue du Pré**
**F-72300 Sablé sur Sarthe (FR)**

(72) Inventeur: **TOUPIN, Joseph François**
**28, rue du Pré**
**F-72300 Sablé Sur Sarthe (FR)**

(74) Mandataire: **Levesque, Denys**
**Cabinet Beau de Loménie 55, rue d'Amsterdam**
**F-75008 Paris (FR)**

Courier Press, Leamington Spa, England.

**Description**

La présente invention a tout d'abord pour objet un procédé de détection d'une élévation de température à laquelle une matière (solide, liquide ou gazeuse) a été soumise, selon lequel on applique à une pièce mobile dans un tube au moins partiellement transparent une force de déplacement vers une position finale qui tend à faire quitter à la pièce mobile un position initiale où elle est immobilisée par une substance fusible placée à l'intérieur du tube, laquelle, en fondant lorsque la température s'élève suffisamment, libère la pièce mobile.

Il existe des moyens de détection du niveau thermique auquel des matières ont été soumises faisant application d'un procédé de ce genre, tels que ceux qui sont connus par les documents FR—A—2 100 043 et US—A—3 965 848. Selon le premier document, la pièce mobile est chassée vers sa position finale par la détente d'un ressort, lequel doit initialement être bandé à l'aide d'un dispositif d'armement spécial. Selon le second document, elle est amenée dans sa position finale par l'effet d'une dépression créé initialement dans le tube.

On connait également des détecteurs dont le fonctionnement est basé par exemple sur la variation de fluidité d'une matière colorée, dont la progression par capillarité dans un support donne une indication visuelle du dépassement d'une température donnée. On connaît encore des détecteurs d'un principe différent, où une réaction enzymatique se traduit par la variation de coloration d'une surface dont l'étendue indique aussi un dépassement d'un seuil thermique. De tels détecteurs sont en général placés à proximité immédiate de la matière à contrôler ou sur celle-ci.

Ces détecteurs présentent des inconvénients: ils sont coûteux, ce qui n'en permet pas l'utilisation pour la vérification de la fraîcheur d'un produit alimentaire, par exemple, présenté sous forme de portions individuelles. Par ailleurs, ces détecteurs, appliqués sur un produit, indiquent toujours le dépassement d'une température superficielle ou de proximité. En outre, ils sont d'une fragilité certaine et ne peuvent sans inconvénients être immergés dans un liquide, ou être soumis aux compressions ou aux chocs inévitables dans les opérations de manutention et de transport. D'autre part, leur structure ne leur permet pas d'être enfoncés dans la matière ou le produit à contrôler.

L'evolution des habitudes alimentaires des populations vivant dans les pays dits développés s'orientent de plus en plus vers les plats tout préparés, cuisinés sous vide par exemple. La durée de vie de ces aliments est fonction de plusieurs paramètres dont le plus important paraît être la température, laquelle, lorsque'elle est située en deça d'une valeur maximale déterminée, limite les proliférations bactériennes. Il en est de même pour la conservation avec maintien de l'inocuité de certains médicaments, dont les vaccins et sérums. Les exemples d'application exposés ci-dessus ne sont pas limitatifs.

Afin de remédier à ces problèmes, l'invention a pour but d'améliorer le procédé du genre décrit au début, de façon qu'il permette de réaliser des dispositifs détecteurs d'élévation de température qui, bien que simples et peu coûteux, soient efficaces et offrent une grande fiabilité.

Selon le procédé objet de l'invention, la force de déplacement appliquée à la pièce mobile est d'origine purement magnétique et est produite par l'interaction d'éléments magnétiques comprenant au moins un aimant permanent et montés respectivement sur le tube et sur la pièce mobile.

Suivant une autre caractéristique de ce procédé, la pièce mobile est préalablement amenée en position initiale par application à cette pièce d'une force d'armement également d'origine pourement magnétique, le matériau fusible ayant été temporairement liquéfié pour permettre cette opération préalable.

D'une manière générale, chacune des forces de déplacement et d'armement mises en jeu est soit une force d'attraction, soit une force de répulsion magnétique.

Le procédé selon l'invention est fondé sur la combinaison de deux phénomènes physiques simples:

d'une part l'existence de matériaux fusibles à des températures diverses qui, à l'état solide, peuvent inderdire le déplacement d'une pièce mobile située en leur sein et soumise à une force, ce déplacement devenant possible lorsque le matériau prend l'état liquide, le changement de phase s'effectuant à la température de fusion qui est une constante caractéristique du matériau utilisé;

d'autre part, les propriétés des éléments magnétiques grâce auxquelles il est possible d'appliquer des forces sans contact physique, à travers des matières solides, liquides ou gazeuses, ces forces, qui ont pour origine des champs magnétiques issus d'aimants permanents, étant des forces d'attraction ou de répulsion qui peuvent être utilisées séparément ou en combinaison additive ou soustractive. L'utilisation exclusive de forces magnétiques permet de s'affranchir de tous éléments élastiques tels que des ressorts, dont les propriétés mécaniques se modifient en fonction de la température, de sorte que le procédé offre une parfaite efficacité et une excellente précision aussi bien aux températures très hautes que très basses.

La présente invention a également pour objet un dispositif détecteur d'élévation de la température d'un objet, fondé sur le procédé défini ci-dessus et comprenant une pièce oblongue, mobile dans un tube au moins partiellement transparent, cette pièce étant soumise à une force qui tend à la faire passer d'une position initiale, où elle est immobilisée par un matériau fusible placé à l'intérieur du tube, à une position finale, la pièce mobile se déplaçant vers cette dernière position lorsqu'elle se trouve libérée par la fusion dudit matériau.

Selon l'invention, la pièce mobile comporte, à l'une au moins de ses extrémités, un élément magnétique pouvant interagir avec un élément magnétique amovible qui peut être monté à une extrémité au moins du tube ou en être ôté, de façon à faire apparaître, par sa mise en place, son retrait ou sa permutation, successivement la force d'armement en position initiale et la force de déplacement vers la position finale, tandis que sont prévus des moyens de repère de la position où se trouve la pièce mobile.

Ainsi, un tel dispositif détecteur met en oeuvre conjointement le changement d'état d'une matière fusible contenue dans un réservoir tubulaire, dans lequel est placée une pièce mobile soumise à une ou plusieurs forces d'origine magnétique (d'attraction et/ou de répulsion). La mise en place ou le retrait de l'élément magnétique amovible permet de faire apparaître ou disparaître une force magnétique, tandis que sa permutation permet, lorsqu'il s'agit d'un aimant ou élément magnétique anisotrope, d'inverser le sens d'une force magnétique existante.

Diverses formes de réalisation d'un tel dispositif sont envisageables.

L'élément magnétique de la pièce mobile peut être un aimant permanent, l'élément magnétique amovible étant également un aimant permanent qui, selon l'orientation qui lui est donnée, exerce une force d'attraction ou une force de répulsion sur l'élément magnétique de la pièce mobile.

La pièce mobile peut comporter un élément magnétique à chacune de ses extrémités, sur lequel peut s'exercer, de la part de l'élément magnétique amovible, une force dans un sens ou dans le sens opposé suivant que ce dernier élément magnétique est placé à l'une ou à l'autre des extrémités du tube.

A une extrémité du tube peut être placé un élément magnétique fixe, tandis que la pièce mobile comporte un élément magnétique à chacune de ses extrémités, celui qui fait face à l'élément magnétique fixe étant respectivement soit repoussé, soit attiré par celui-ci, et qu'un élément magnétique amovible est prévu, qui peut être placé à l'autre extrémité du tube, exerçant alors, sur l'élément magnétique de la pièce mobile qui lui fait face, une force respectivement soit de répulsion supérieure à la précédente force de répulsion, soit d'attraction.

D'une façon générale, les éléments magnétiques entre lesquels apparaît une force d'attraction sont constitués soit par deux aimants permanents offrant en regard des pôles de signes opposés, soit par un aimant permanent et une masse de fer doux.

Par ailleurs, lorsque la pièce mobile comporte un élément magnétique à chacune de ses extrémités, ces deux éléments peuvent avantageusement être réunis en un seul, constitué, suivant le cas, d'un barreau de fer doux ou d'un aimant permanent oblong.

Il convient, pour certaines applications particulières, de munir le tube d'une pointe terminale permettant de piquer et de faire pénétrer partiellement le dispositif dans l'objet ou la matière dont une élévation de température doit être détectée, de façon à permettre la surveillance de la température au coeur de l'objet ou du produit dans lequel le dispositif est piqué.

D'autres caractéristiques et avantages de l'invention ressortiront plus clairement de la description qui va suivre, en regard des dessins annexés, d'exemples de réalisation non limitatifs.

La figure 1 représente, en demi-coupe longitudinale, un dispositif détecteur selon l'invention dont l'armement s'effectue soit par retournement d'un capuchon magnétique, soit par mise en place de celui-ci à l'autre extrémité du dispositif.

Les figures 2 et 3 représentent de même deux variantes de réalisation d'un dispositif détecteur selon l'invention, muni d'une pointe de pénétration, dont l'armement s'effectue par retrait d'un élément magnétique.

La figure 4 représente de même une partie d'un dispositif détecteur aménagé pour indiquer la durée de dépassement d'une température donnée.

Les différents détecteurs représentés utilisent le changement d'état d'une matière contenue dans un réservoir dans lequel est placé une pièce mobile soumise à une force d'attraction ou de répulsion d'origine magnétique.

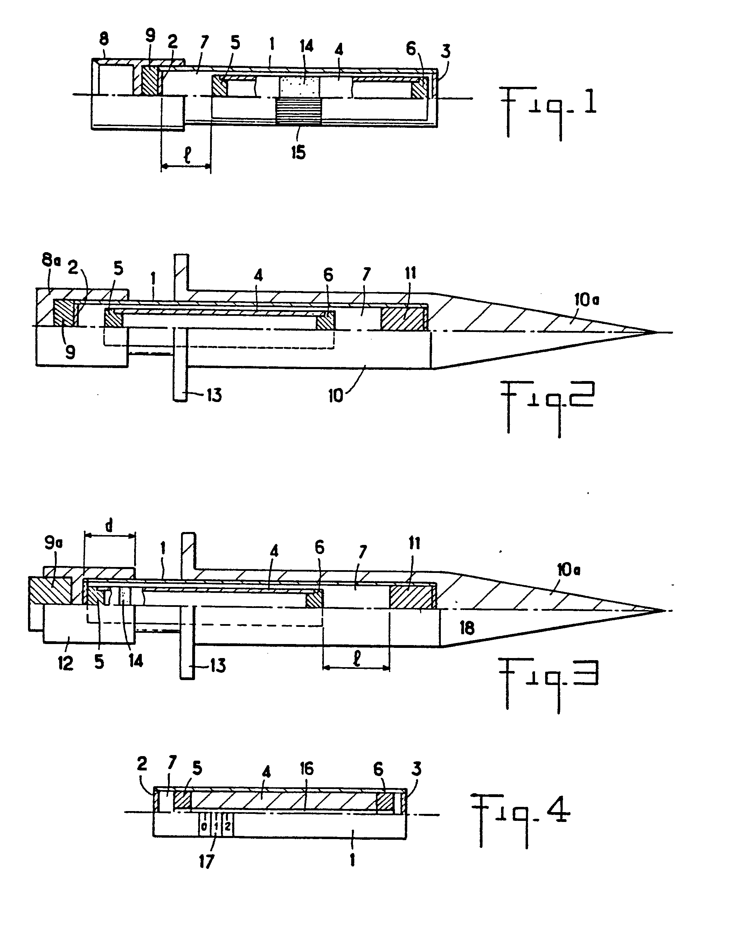

Le détecteur de la figure 1 se compose d'un tube transparent 1 obturé à ses deux extrémités par des pièces 2 et 3. A l'intérieur du tube 1 est susceptible de coulisser librement, sur une certaine longueur l, une pièce 4 constituée par un tube, à chacune des extrémités duquel a été emmanchée et immobilisée une masse magnétique anisotrope (ou aimant) 5, 6. La pièce mobile 4 possède un anneau coloré 14 ou plusieurs anneaux colorés alternativement d'une couleur différente, cette coloration étant avantageusement fluorescente ou luminescente.

Le tube 1 forme un réservoir étanche dans lequel a été introduit, avant obturation de l'une des extrémités, un matériau à changement de phase 7 qui le remplit intégralement et qui est choisi de façon que ses caractéristiques physiques de modification de structure, et notamment la température à laquelle de l'état solide il redevient liquide, soient parfaitement connues et immuables. Ce matériau peut être soit de synthèse, soit d'origine animale ou végétale; il peut encore être métallique. Il faut et il suffit que sa température de solidification ou de liquéfaction soit invariable, la liquéfaction pouvant indifféremment être franche, comme dans le cas de l'eau, ou admettre une phase intermédiaire dite "pâteuse" comme dans le cas des graisses par exemple.

Les prototypes réalisés utilisaient, en tant que matériau 7, de l'hexadécène, qui est une paraffine organique dont la température de changement de phase est de 2°C. Les différents composants desdits prototypes étaient en matière thermoplastique polycarbonate pour les tubes, les masses magnétiques étaient des élastomères mélangés à des poudres de ferrite orientées. L'obturation du tube transparent 1 formant réservoir était assuré par simple collage des pièces 2 et 3.

Chaque extrémité du tube 1 peut être coiffée d'un capuchon 8 amovible, renfermant un aimant 9. Les polarités des aimants 5 et 9 l'une par rapport à l'autre sont choisies de telle manière que, au cours de la solidification du produit à changement de phase 7, la pièce interne 4 soit repoussée par l'action du champ magnétique émanant de l'aimant 9 du capuchon 8 sur l'aimant 5, la polarité des deux masses magnétiques se faisant vis-à-vis étant de même signe. Pour la mise en service du système, il faut et il suffit alors, le produit à changement de phase 7 se trouvant à l'état solide, de retourner de 180° le capuchon 8 dont l'aimant 9, présentant alors une polarité inverse, attire la pièce interne 4 par son aimant 5. Il faut noter que cette mise en service sera assurée et produira les mêmes effets si le capuchon 8 est placé à l'autre extrémité du tube 1, le sens d'emmancehement du capuchon étant choisi de telle sorte que la masse magnétique de l'aimant 9 qu'il contient soit de même polarité que la masse magnétique de l'aimant 5 lui faisant vis-à-vis et située à l'extrémité de la pièce 4.

Dans ces conditions, le détecteur étant placé soit dans l'ambiance, soit sur le produit à contrôler, la translation de la pièce 4 se produira dès que le matériau 7 passera de l'état solide à l'état liquide, ce déplacement étant matérialisé par le déplacement de l'anneau coloré 14 de la pièce interne 4 par rapport à un anneau opaque 15 que comporte le tube externe 1 et qui masquait initialement l'anneau 14.

La variante représentée à la figure 2 permet de mettre en évidence le dépassement d'une température à l'intérieur d'un produit ou d'une matière par enfoncement du détecteur dans son sein. Le présent dispositif, dont le fonctionnement utilise des phénomènes analogues à ceux qui ont été explicités à propos du dispositif de la figure 1, comprend : une pièce 10 comportant d'une part une pointe 10a de pénétration et, d'autre part, une collerette 13 limitant la pénétration du détecteur. La pièce 10 obture d'une manière étanche une extrémité du tube transparent 1. A l'intérieur de ce tube et à cette même extrémité a été emmanché et immobilisé un aimant 11 présentant une masse magnétique de même polarité que la masse magnétique de l'aimant 6 lui faisant vis-à-vis. A l'autre extrémité du tube 1 est placé un aimant 9 monté dans un capuchon amovible 8a et présentant une masse magnétique de même polarité que la masse magnétique de l'aimant 5 lui faisant vis-à-vis et située sur la pièce 4. Les divers éléments magnétiques sont prévus de façon que l'intensité du flux magnétique de l'aimant 9 soit nettement plus élevée que l'intensité du flux créé par l'aimant 11. Par suite, la résultante des deux forces opposées correspondantes cause la répulsion du tube interne 4 vers la pointe de pénétration 10a. Cette position initiale de la pièce 4 étant choisie pour la phase de solidification du matériau 7, l'enlèvement du capuchon 8a mettra en service le système en créant l'application à la pièce 4 d'une force de sens opposé résultant de la seule action répulsive de l'aimant fixe 11 sur l'aimant 6 de ladite pièce. Lorsque la température augmente au point que le matériau à changement de phase 7 repasse à l'état liquide, cette liquéfaction cause le déplacement de la pièce 4 soumise à ladite force, mis en évidence par un secteur coloré 14 de la pièce 4 qui vient alors se présenter devant l'extrémité transparente du tube 1 opposée à la pointe 10a de la pièce 10.

La figure 3 illustre une forme de réalisation qui ne met en oeuvre que des forces magnétiques d'attraction. La structure générale de ce détecteur est semblable à celle du détecteur représenté à la figure 2. Une pièce de pénétration 10 se terminant en une pointe 10a obture de manière étanche l'une des extrémités d'un tube 1 transparent et recouvre plus de la moitié de la longueur de ce tube. L'autre extrémité de celui-ci est obturée par un capuchon 12 fixe qui le coiffe sur une courte longueur d et présente sur sa face terminale une cavité dans laquelle peut être inséré, avec léger serrage, un aimant 9a en forme de pastille. A l'extrémité opposée du tube 1 est placé un aimant 11 fixe. Ce tube contient une pièce interne 4 tubulaire, qui peut s'y déplacer longitudinalement sur une longueur l, au sein d'une substance 7 capable de passer de l'état solide à l'état liquide ou inversement à une température déterminée. La pièce mobile 4 comporte à ses extrémités des aimants 5, 6. La direction de magnétisation des quatre aimants 9a, 5, 6, 11, coïncide avec l'axe général 18 du détecteur. De plus, les pôles en regard des aimants 6, 11 voisins sont de signes opposés. La pièce 4 comporte un anneau coloré 14 qui est masqué par le capuchon 8a, en matière opaque, lorsque la pièce mobile 4 est dans sa position initiale dans le tube 1 (qui est celle représentée sur la figure 3), tandis que cet anneau devient visible à travers la portion du tube transparent 1 comprise entre le capuchon 8a et la collerette 13 de la pièce 10 lorsque la pièce 4 vient prendre sa position finale après s'être déplacée de sa position initiale vers la pointe 10a de la pièce 10.

Préalablement, la pièce 4 est placée dans sa position initiale, où elle est retenue par l'aimant 9a inséré dans la cavité extérieure du capuchon 8a dans un sens tel que les pôles en regard des aimants 9a et 5 soient de signes opposés, de sorte que l'aimant 9a attire à lui la pièce 4.

Pour utiliser le dispositif, il suffit de retirer l'aimant 9a après que la substance 7 se soit solidifiée en raison d'un abaissement de température suffisant. La pièce 4, soumise dès lors à la seule attraction de l'aimant 11 sur son aimant 6, vient prendre sa position finale dès que la température remonte de façon à faire se reliquéfier la substance 7. Ce déplacement de la pièce 4 se manifeste par l'apparition de son anneau coloré 14, lequel cesse d'être caché par le capuchon 8a et devient visible à travers la paroi du tube 1.

On notera que, une fois que le tube 4 a pris ainsi sa position finale, où son aimant 6 se trouve collé à l'aimant 11 du tube 1, il n'est plus possible (à moins d'employer des moyens extraordinaires) de faire revenir la pièce 4 dans sa position initiale. Ainsi, la détection de la remontée de température s'effectue grâce à un phénomène irréversible.

Plusieurs variantes du dispositif de la figure 3 sont envisageables:

chacun des couples 9a, 5 et 6, 11 d'éléments magnétiques peut être constitué non pas de deux aimants, mais d'un aimant et d'une petite masse de fer doux, le mode de fonctionnement du dispositif restant inchangé;

les deux éléments magnétiques de la pièce 4 peuvent être réunis en un seul élément, soit, selon le cas, en un unique aimant de forme oblongue ou en un morceau de tige de fer doux.

Un détecteur selon l'invention peut être aménagé pour indiquer de manière visible le temps durant lequel il a été soumis à une température supérieure au point de liquéfaction du matériau fusible. Dans ce but (figure 4), la pièce mobile 4 est parfaitement ajustée à l'intérieur du tube 1 et forme avec celui-ci un ensemble piston-cylindre. Les forces magnétiques de déplacement de la pièce mobile 4, agissant sur l'aimant 5 et/ou l'aimant 6 dont celle-ci est munie à ses extrémités, la font se déplacer (vers la gauche sur la figure 4), le matériau 7 à l'état liquide se transférant de l'extrémité de gauche vers l'extrémité de droite de ladite pièce via un canal capillaire calibré 16 percé axialement dans celle-ci, laquelle est ici faite d'un barreau transparent plein. Le canal calibré 16 ne laisse passer qu'un volume bien défini, par unité de temps, du matériau 7 pour une viscosité de valeur déterminée de celui-ci, de sorte que la longueur de remplissage du canal 16 par le matériau 7, que l'on a pris soin de colorer, indique, en regard d'une graduation 17 portée par le tube 1 transparent, le temps pendant lequel la température à laquelle a été exposé le détecteur a dépassé le point de liquéfaction du matériau 7.

**Revendications**

1. Procédé de détection d'une élévation de température à laquelle une matière a été soumise, selon lequel on applique à une pièce mobile dans un tube au moins partiellement transparent une force de déplacement vers une position finale qui tend à faire quitter à la pièce mobile une position initiale où elle est immobilisée par une substance fusible placée à l'intérieur du tube, laquelle, en fondant lorsque la température s'élève suffisamment, libère la pièce mobile, caractérisé par le fait que la force de déplacement appliquée à la pièce mobile (4) est d'origine purement magnétique et est produit par l'interaction d'éléments magnétiques comprenant au moins un aimant permanent et montés respectivement sur le tube (1) et sur la pièce mobile (4).

2. Procédé selon la revendication 1, caractérisé par le fait que la pièce mobile (4) est préalablement amenée en position initiale par application à cette pièce d'une force d'armement d'origine purement magnétique, le matériau fusible (7) ayant été temporairement liquéfiée.

3. Procédé selon la revendication 2, caractérisé par le fait que chacune des forces de déplacement et d'armement est soit une force d'attraction, soit une force de répulsion magnétique.

4. Dispositif détecteur d'élévation de la température d'un objet, comprenant une pièce oblongue, mobile dans un tube au moins partiellement transparent, cette pièce étant soumise à une force qui tend à la faire passer d'une position initiale, où elle est immobilisée par un matériau fusible placé à l'intérieur du tube, à une position finale, la pièce mobile se déplaçant vers cette dernière position lorsqu'elle se trouve libérée par la fusion dudit matériau, caractérisé par le fait que la pièce mobile (4) comporte, à l'une au moins de ses extrémités, un élément magnétique (5, 6) pouvant interagir avec un élément magnétique amovible (9, 9a) qui peut être monté à une extrémité au moins du tube (1) ou en être ôté, de façon à fair apparaître, par sa mise en place, son retrait ou sa permutation, successivement la force d'armement en position initiale et la force de déplacement vers la position finale, tandis que sont prévus des moyens (14, 15) de repère de la position où se trouve la pièce mobile (4).

5. Dispositif selon la revendication 4, caractérisé par le fait que l'élément magnétique de la pièce mobile est un aimant permanent (5) et que l'élément magnétique amovible est également un aimant permanent (9) qui, selon l'orientation qui lui est donnée, exerce une force d'attraction ou une force de répulsion sur l'élément magnétique (5) de la pièce mobile (4).

6. Dispositif selon la revendication 4, caractérisé par le fait que la pièce mobile (4) comporte un élément magnétique (5, 6) à chacune de ses extrémités, sur lequel peut s'exercer, de la part de l'élément magnétique amovible (9), une force dans un sens ou dans le sens opposé suivant que ce dernier élément magnétique est placé à l'une ou à l'autre des extrémités du tube (1).

7. Dispositif selon la revendication 4, caractérisé par le fait qu'à une extrémité du tube (1) est placé un élément magnétique fixe (11), que la pièce mobile (4) comporte un élément magnétique (5, 6) à chacune de ses extrémités, celui qui fait face à l'élément fixe (11) étant repoussé par celui-ci, et qu'un élément magnétique amovible (9) est prévu, qui peut être placé à l'autre extrémité du tube (1), exerçant alors, sur l'élément magnétique (5) de la pièce mobile qui lui fait face, une force de répulsion supérieure à la précédente.

8. Dispositif selon la revendication 4, caractérisé par le fait qu'à une extrémité du tube (1) est placé un élément magnétique fixe (11), que la pièce mobile (4) comporte un élément magnétique (5, 6) à chacune de ses extrémités, celui qui fait face à l'élément magnétique fixe (11) étant attiré par celui-ci, et qu'un élément magnétique amovible (9a) est prévu, qui peut être placé à l'autre extrémité du tube (1), exerçant alors, sur l'élément magnétique (5) de la pièce mobile qui lui fait face, une force d'attraction.

9. Dispositif selon l'une quelconque des revendications 4 à 8, caractérisé par le fait que les éléments magnétiques entre lesquels apparaît une force d'attraction sont constitués soit par deux aimants permanents offrant en regard des pôles de signes opposés, soit par un aimant permanent et une masse de fer doux.

10. Dispositif selon l'une quelconque des revendications 4 à 9, caractérisé par le fait que lorsque la pièce mobile (4) comporte un élément magnétique (5, 6) à chacune de ses extrémités, ces deux éléments sont réunis en un seul, constitué, suivant le cas, d'un barreau de fer doux ou d'un aimaint permanent oblong.

11. Dispositif selon l'une quelconque des revendications 4 à 10, caractérisé par le fait que la pièce mobile (4) est dimensionnée pour coulisser dans le tube (1) à la manière d'un piston dans un cylindre, et qu'elle est réalisée sous la forme d'un barreau de matière transparente percé longitudinal d'un canal capillaire (16) par où s'effectue le transfert du matériau fusible (7) d'une extrémité à l'autre du tube (1) lorsque s'y déplace la pièce mobile (4), la longueur qu'occupe le matériau fusible — coloré — dans le canal capillaire (16) étant fonction du temps pendant lequel le dispositif a été exposé à une température supérieure au point de fusion dudit matériau.

12. Dispositif selon l'une quelconque des revendications 4 à 11, caractérisé par le fait que le tube est muni d'une pointe terminale (10a) qui permet de piquer et de le faire pénétrer partiellement dans l'objet ou la matière dont une élévation de température doit être détectée.

**Patentansprüche**

1. Verfahren zur Bestimmung einer Temperaturerhöhung, der ein Stoff ausgesetzt wurde, bei dem man auf ein bewegliches Bauteil in einem wenigstens teilweise transparenten Rohr eine Kraft zur Verschiebung zu einer Endlage hin einwirken läßt, die dazu neigt, das bewegliche Bauteil eine Anfangslage verlassen, zu lassen, wo es durch einen im Inneren des Rohres angeordneten schmelzbaren Stoff festgelegt ist, der durch Schmelzen, wenn die Temperatur genügend steigt, das bewegliche Bauteil freigibt, dadurch gekennzeichnet, daß die auf das bewegliche Bauteil (4) einwirkende Verschiebungskraft von rein magnetischem-Ursprung ist und durch Einwirkung von magnetischen Elementen erzeugt wird, die wenigstens einen Dauermagnet aufweisen und auf dem Rohr (1) bzw. auf dem beweglichen Bauteil (4) montiert sind.

2. Verfahren nach dem Anspruch 1, dadurch gekennzeichnet, daß das bewegliche Bauteil (4) vorab durch Einwirkung einer Anzugskraft rein magnetischen Ursprungs darauf in die Anfangslage gebracht wird, wobei das schmelzbare Material (7) zeitweilig verflüssigt wird.

3. Verfahren nach dem Anspruch 2, dadurch gekennzeichnet, daß jede der Verschiebungs- und Anzugskräfte eine magnetische Anziehungs- oder Abstoßungskraft ist.

4. Vorrichtung zur Bestimmung einer Erhöhung der Temperatur eines Gegenstandes mit einem länglichen, in einem wenigstens teilweise transparenten Rohr beweglichen Bauteil, das einer Kraft ausgesetzt wird, die dazu neigt, es von einer Anfangslage, wo es durch ein im Inneren des Rohres angeordnetes, schmelzbares Material festgelegt ist, in eine Endlage übergehen zu lassen, welches bewegliche Bauteil sich in diese letztere Lage verschiebt, wenn es durch Schmelzen dieses Materials freigesetzt ist, dadurch gekennzeichnet, daß das bewegliche Bauteil (4) an wenigstens einem seiner Enden ein magnetisches Element (5, 6) aufweist, das mit einem lösbaren magnetischen Element (9, 9a) das an wenigstens einem Ende des Rohres (1) montiert oder davon gelöst werden kann, derart zusammenwirken kann, um durch seine Anbringung, seine Abnahme oder seine Änderung nacheinander die Anzugskraft in die Anfangsstellung und die Verschiebungskraft zur Endstellung auftreten zu lassen, während Mittel (14, 15) zur Markierung der Lage vorgesehen sind, wo sich das bewegliche Bauteil (4) befindet.

5. Vorrichtung nach dem Anspruch 4, dadurch gekennzeichnet, daß das magnetische Element des beweglichen Bauteils ein Dauermagnet (5) ist und daß das lösbare magnetische Element ebenfalls ein Dauermagnet (9) ist, der entsprechend der ihm gegebenen Ausrichtung eine Anziehungskraft oder eine Abstoßungskraft auf das magnetische Element (5) des beweglichen Bauteils (4) ausübt.

6. Vorrichtung nach dem Anspruch 4, dadurch gekennzeichnet, daß das bewegliche Bauteil (4) an jedem seiner Enden ein magnetisches Element (5, 6) aufweist, auf das vom lösbaren magnetischen Element (9) eine Kraft in einer Richtung oder in der entgegengesetzten Richtung je nachdem ausgeübt werden kann, ob das letztere magnetische Element am einem oder am anderen der Enden des Rohres (1) angebracht ist.

7. Vorrichtung nach dem Anspruch 4, dadurch gekennzeichnet, daß an einem Ende des Rohres (1) ein festes magnetisches Element (11) angeordnet ist, daß das bewegliche Bauteil (4) ein magnetisches Element (5, 6) an jeder seiner Enden aufweist, wobei das dem festen magnetischen Element (11) zugewandte von diesem abgestoßen wird, und daß ein lösbares magnetisches Element (9) vorgesehen ist, das am anderen Ende des Rohres (1) angeordnet werden kann, wo es dann auf das ihm zugewandte magnetische Element (5) des beweglichen Bauteils eine der vorgenannten überlegene Abstoßungskraft ausübt.

8. Vorrichtung nach dem Anspruch 4, dadurch gekennzeichnet, daß an einem Ende des Rohres (1) ein festes magnetisches Element (11) angeordnet ist, daß das bewegliche Bauteil (4) ein magnetisches Element (5, 6) an jeder seiner Enden aufweist, wobei das dem festen magnetischen Element (11) zugfewandte von diesem angezogen wird, und daß ein lösbares magnetisches Element (9a) vorgesehen ist, das am anderen Ende des Rohres (1) angeordnet werden kann, wo es dann auf das ihm zugewandte magnetische Element (5) des beweglichen Bauteils eine Anziehungskraft ausübt.

9. Vorrichtung nach irgendeinem der Ansprüche 4 bis 8, dadurch gekennzeichnet, daß die magnetischen Elemente, zwischen denen eine Anziehungskraft auftritt, aus zwei Dauermagneten mit einander zugewandten Polen umgekehrter Vorzeichen oder aus einem Dauermagnet und einer Weicheisenmasse bestehen.

10. Vorrichtung nach irgendeinem der Ansprüche 4 bis 9, dadurch gekennzeichnet, daß, wenn das bewegliche Bauteil (4) an jedem seiner Enden ein magnetisches Element (5, 6) aufweist, diese beiden Elemente zu einem einzigen vereint sind, das je nach dem Fall aus einem Weicheisenstab oder einem länglichen Dauermagnet besteht.

11. Vorrichtung nach irgendeinem der Ansprüche 4 bis 10, dadurch gekennzeichnet, daß das bewegliche Bauteil (4) zum Gleiten im Rohr (1) nach Art eines Kolbens in einem Zylinder dimensioniert ist und daß es in Form eines Stabes aus transparentem Material gefertigt ist, der längs von einem kapillaren Kanal (16) durchbohrt ist, durch den die Förderung des schmelzbaren Stoffes (7) von einem Ende des Rohres (1) zum anderen erfolgt, wernn sich darin das bewegliche Bauteil (4) verschiebt, wobei die Länge, die der schmelzbare — gefärbte — Stoff im kapillaren Kanal (16) einnimmt, Funktion der Zeit ist, während der die Vorrichtung einer Temkperatur über dem Schmelzpunkt dieses Stoffes ausgesetzt war.

12. Vorrichtung nach irgendeinem der Ansprüche 4 bis 11, dadurch gekennzeichnet, daß das Rohr mit einer Endspitze (10a) ausgerüstet ist, die ermöglicht, es in den Gegenstand oder Werkstoff, dessen Temperaturerhöhung bestimmt werden soll, einzustecken und teilweise eindringen zu lassen.

**Claims**

1. Method for detecting a rise in temperature to which a material has been subjected, whereby there is applied to a piece mobile in an at least partially transparent tube a force of displacement towards a final position which tends to cause the mobile piece to leave an initial position where it is immobilized by a meltable substance placed inside the tube which substance, on melting when the temperature rises sufficiently, releases the mobile piece, characterized by the fact that the force of displacement applied to the mobile piece (4) is of purely magnetic origin and is produced by the interaction of magnetic elements comprising at least one permanent magnet and mounted respectively on the tube (1) and on the mobile piece (4).

2. Method according to claim 1, characterized by the fact that the mobile piece (4) is previously brought into initial position by application to this piece of an arming force of purely magnetic origin, the meltable material (7) having been temporarily liquefied.

3. Method according to claim 2, characterized by the fact that each of the forces of displacement and of arming is either a force of magnetic attraction or a force of magnetic repulsion.

4. Device for detecting rise in the temperature of an object, comprising an oblong piece, mobile in an at least partially transparent tube, this piece being subjected to a force which tends to cause it to pass from an initial position where it is immobilized by a meltable material placed inside the tube, to a final position, the mobile piece moving towards this latter position when it is released by the melting of said material, characterized by the fact that the mobile piece (4) comprises, at at least one of its ends, a magnetic element (5, 6) adapted to interact with a removable magnetic element (9, 9a) which may be mounted to at least one end of the tube (1) or be removed therefrom, so as to cause to appear, by positioning, withdrawal or permutation thereof, successively, the arming force in initial position and the force of displacement towards the final position, whereas means (14, 15) are provided for locating the position where the mobile piece (4) is located.

5. Device according to claim 4, characterized by the fact that the magnetic element of the mobile piece is a permanent magnet (5) and the removable magnetic element is likewise a permanent magnet (9) which depending on the orientation which is given thereto, exerts a force of attraction or a force of repulsion on the magnet element (5) of the mobile piece (4).

6. Device according to claim 4, characterized by the fact that the mobile piece (4) comprises a magnetic element (5, 6) at each of its ends, on which may be exerted, by the removable magnetic element (9), a force in one direction or in the opposite direction depending on whether this latter magnetic element is placed at one or at the other of the ends of the tube (1).

7. Device according to claim 4, characterized by the fact that at one end of the tube (1) is placed a fixed magnetic element (11), that the mobile piece (4) comprises a magnetic element (5, 6) at each of its ends, the one which faces the fixed magnetic element (11) being repelled thereby, and that a removable magnetic element (9) is provided which may be placed at the other end of the tube (1), in that case exerting on the magnetic element (5) of the mobile piece which faces it, a force of repulsion greater than the preceding one.

8. Device according to claim 4, characterized by the fact that at one end of the tube (1) is placed a fixed magnetic element (11), that the mobile piece (4) comprises a magnetic element (5, 6) at each of its ends, the one facing the fixed magnetic element (11) being attracted thereby, and that a removable magnetic element (9a) is provided, which may be placed at the other end of the tube (1), in that case exerting on the magnetic element (5) of the mobile piece facing it, a force of attraction.

9. Device according to any one of claims 4 to 8, characterized by the fact that the magnetic elements between which appears a force of attraction are constituted either by two permanent magnets offering, opposite, poles of opposite signs, or by a permanent magnet and a mass of soft iron.

10. Device according to any one of claims 4 to 9, characterized by the fact that, when the mobile piece (4) comprises a magnetic element (5, 6) at each of its ends, these two elements are joined as one, constituted, depending on the case, by a bar of soft iron or an oblong permanent magnet.

11. Device according to any one of claims 4 to 10, characterized by the fact that the mobile piece (4) is dimensioned to slide in the tube (1) in the manner of a piston in a cylinder and it is made in the form of a bar of transparent matter pierced longitudinally by a capillary channel (16) via which is effected the transfer of the meltable material (7) from one end to the other of tube (1) when the mobile piece (4) moves therein, the length occupied by the — coloured — meltable material in the capillary channel (16) being a function of the time during which the device has been exposed to a temperature greater than the melting point of said material.

12. Device accordiong to any one of claims 4 to 11, characterized by the fact that the tube is provided with a terminal point (10a) which makes it possible to prick and cause it to penetrate partially into the object or the material of which a rise in temperature must be detected.

Fig.1

Fig.2

Fig.3

Fig.4